(19) **Europäisches Patentamt / European Patent Office / Office européen des brevets**

(11) **EP 1 277 033 B1**

(12) **EUROPÄISCHE PATENTSCHRIFT**

(45) Veröffentlichungstag und Bekanntmachung des Hinweises auf die Patenterteilung:
**23.09.2009 Patentblatt 2009/39**

(21) Anmeldenummer: **01923518.3**

(22) Anmeldetag: **15.03.2001**

(51) Int Cl.:
***G01L 9/06*** *(2006.01)*

(86) Internationale Anmeldenummer:
**PCT/DE2001/000992**

(87) Internationale Veröffentlichungsnummer:
**WO 2001/070625 (27.09.2001 Gazette 2001/39)**

(54) **MIKROMECHANISCHES BAUELEMENT UND ABGLEICHVERFAHREN**

MICROMECHANICAL COMPONENT AND BALANCING METHOD

COMPOSANT MICROMECANIQUE ET PROCEDE D'EQUILIBRAGE

(84) Benannte Vertragsstaaten:
**DE FR GB IT**

(30) Priorität: **21.03.2000 DE 10013904**

(43) Veröffentlichungstag der Anmeldung:
**22.01.2003 Patentblatt 2003/04**

(73) Patentinhaber: **ROBERT BOSCH GMBH**
**70442 Stuttgart (DE)**

(72) Erfinder:
- **MUCHOW,Joerg**
**72764 Reutlingen (DE)**
- **FRANZ, Jochen**
**72762 Reutlingen (DE)**

- **LIPPHARDT, Uwe**
**72820 Sonnenbuehl (DE)**
- **DUELL, Andreas**
**70567 Stuttgart (DE)**
- **ROMES,Wolfgang**
**71665 Vaihingen/Enz (DE)**

(56) Entgegenhaltungen:
| | |
|---|---|
| **DE-A- 3 419 710** | **DE-A- 19 924 061** |
| **US-A- 4 333 349** | **US-A- 4 726 232** |
| **US-A- 5 537 882** | |

- **PATENT ABSTRACTS OF JAPAN vol. 1996, no. 08, 30. August 1996 (1996-08-30) & JP 08 086671 A (HITACHI LTD), 2. April 1996 (1996-04-02)**

**Beschreibung**

STAND DER TECHNIK

Die vorliegende Erfindung betrifft ein mikromechanisches Bauelement, insbesondere einen Drucksensor, mit einem Substrat, welches einen Membranbereich und einen Umgebungsbereich des Membranbereichs aufweist; mindestens einem in dem Membranbereich vorgesehenen durch Verformung des Membranbereichs veränderlichen Meßwiderstand; und einer in dem Umgebungsbereich vorgesehenen entsprechenden Auswerteschaltung, wobei durch eine Verformung von Teilen, insbesondere Leiterbahnen, der Auswerteschaltung relativ zum Substrat ein Störeinfluß auf den Meßwiderstand erzeugbar ist. Die Erfindung betrifft ebenfalls ein entsprechendes Abgleichverfahren.

Obwohl prinzipiell auf beliebige mikromechanische Bauelemente anwendbar, werden die vorliegende Erfindung sowie die ihr zugrundeliegende Problematik in bezug auf einen mikromechanischen Drucksensor erläutert.

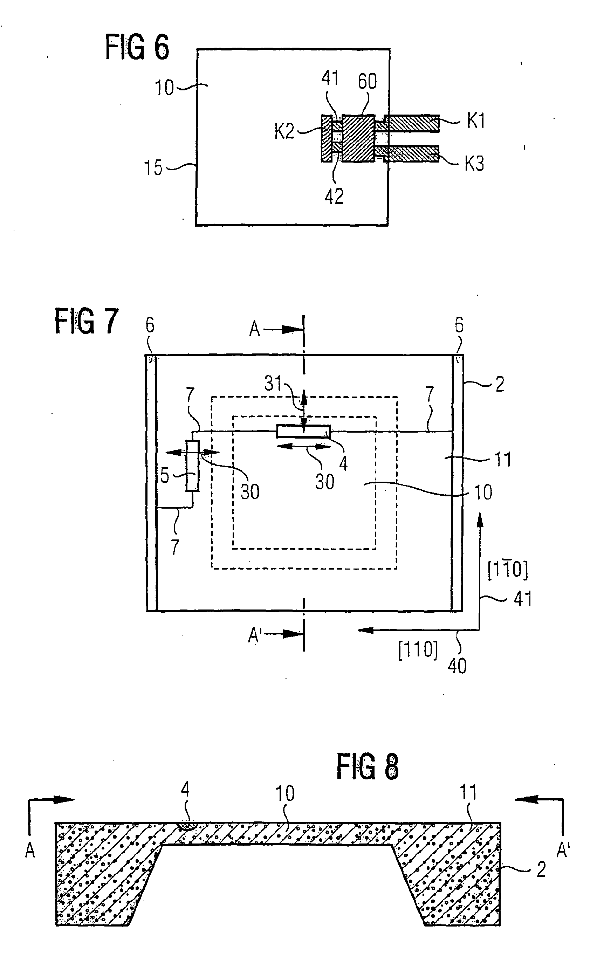

Aus der DE 197 01 055 A1 ist ein Halbleiter-Drucksensor zur Messung eines von außen anliegenden Drucks bekannt. Figur 7 zeigt eine Aufsicht auf diesen bekannten Drucksensor. Eine Schnittzeichnung dieses Drucksensors entlang der Schnittlinie A - A' ist in Figur 8 gezeigt. Der Drucksensor ist auf einem Substrat 2 aus Silizium hergestellt, welches eine (100)-Orientierung aufweist. Auf der Unterseite einer Membran 10 befindet sich eine pyramidenstumpfförmige Vertiefung. Ihre Ausformung ist derart, dass am Ort des Pyramidenstumpfs nur Siliziummaterial einer geringen Restdicke, die Membran 10, übrigbleibt. Die Begrenzungslinien des Pyramidenstumpfs sind in Figur 7 gestrichelt gezeichnet und liegen parallel zu den [110]- und [1$\underline{1}$0]-Richtungen, deren Verlauf in Figur 7 mit den Pfeilen 40 bzw. 41 gekennzeichnet ist. Der nicht gedünnte Teil des Siliziumsubstrats 2 wird auch Träger 11 genannt.

Auf der Membran 10 nahe der Membrankante befindet sich ein Messwiderstand 4, der in [110]-Richtung verläuft. Auf dem Träger 11 befinden sich zwei Elektroden 6, welche im hier gewählten Ausführungsbeispiel aus aufgedampften Aluminium bestehen, wobei je eine Elektrode vor und eine Elektrode hinter dem Messwiderstand 4 als langgezogene, senkrecht zum Messwiderstand 4 verlaufende Metallisierung ausgebildet ist. Senkrecht zur Richtung des Messwiderstandes 4, in [110]-Richtung verlaufend, befindet sich bei der linken Elektrode ein Kompensationswiderstand 5. Der Kompensationswiderstand 5 ist mit einem Ende über einen Verbindungsleiter 7 mit dem Messwiderstand 4 verbunden, mit seinem anderen Ende über einen zweiten Verbindungsleiter 7 mit der Elektrode 6. Die Doppelpfeile 30 und 31, 32 kennzeichnen mechanische Spannungen, welche bei der Erklärung der Funktionsweise dieses bekannten Drucksensors mit Hystereseausgleich zum Tragen kommen.

Figur 8 zeigt einen Querschnitt durch den Drucksensor' aus Figur 7. Das Substrat 2 weist eine im Querschnitt trapezförmige Vertiefung auf, welche durch den Träger 11 und die Membran 10 begrenzt wird. In der Oberfläche der Membran 10 befindet sich der Messwiderstand 4. Der Messwiderstand 4 ist durch Einbringen einer lokalen Dotierungszone in das Siliziummaterial realisiert.

Die Funktionsweise des bekannten Drucksensors mit Hystereseausgleich ist folgende. Durch,einen von außen auf den Drucksensor einwirkenden Druck wird der Drucksensor mechanisch verformt. Die Dicke des Trägers 11 beträgt typischerweise mehrere 100 $\mu$m, während die Dicke der Membran 10 typischerweise mehrere $\mu$m beträgt. Wegen der hieraus resultierenden unterschiedlichen Steifigkeiten ist die mechanische Verformung im Träger 11 im Vergleich zur mechanischen Verformung in der Membran vernachlässigbar. Die aus dem von außen anliegenden Druck resultierende mechanische Spannung bzw. Verformung ist durch einen Pfeil 31, dessen Länge ein Maß für die Verformung ist, veranschaulicht. Die mechanische Verformung ist exemplarisch an einem Punkt, nämlich am Ort des Messwiderstandes 4, dargestellt.

Weiterhin ist im Drucksensor eine erste Deformation 30 vorhanden, deren Ursache eine mechanische Störspannung ist, welche im vorliegenden Fall auf den unterschiedlichen thermischen Ausdehnungskoeffizienten vom Aluminium der Elektroden und Silizium des Substrats 2 beruht. Jeden Punkt im Drucksensor kann eine solche erste mechanische Spannung bzw. Verformung 30 zugeordnet werden, jedoch sollen nur zwei Punkte im Drucksensor betrachtet werden. Diese beiden Punkte seien der Ort des Messwiderstandes 4 und der Ort des Kompensationswiderstandes 5. Im hier gewählten Ausführungsbeispiel sei die erste Deformation 30 überall gleich.

Der Messwiderstand 4 und der Kompensationswiderstand 5 sind so dimensioniert, dass ihre piezoresistiven Koeffizienten betragsmäßig gleich sind. Ebenso seien die Absolutwerte des elektrischen Widerstandes bei gleichen äußeren Bedingungen gleich. Somit sind die Änderungen des elektrischen Widerstandswertes im Messwiderstand 4 und im Kompensationswiderstand 5 auf Grund der ersten Deformation 30 betragsmäßig gleich. Da jedoch einmal der Widerstand in Richtung der Deformation und einmal senkrecht zur Deformation angeordnet ist, weisen die beiden Widerstandsänderungen ein unterschiedliches Vorzeichen auf. Die Gesamtwiderstandsänderung des Ersatzwiderstandes für die Serienschaltung aus Messwiderstand 4 und Kompensationswiderstand 5 auf Grund der ersten Deformation 30 ist somit 0. Somit bleibt ausschließlich die Änderung des Messwiderstandes auf Grund der zweiten Deformation 31, welche der Kompensationswiderstand 5, der sich auf dem Träger 11 befindet nicht ausgesetzt ist.

Als nachteilhaft bei der obigen bekannten Lösung zur Kompensation der Hysterese hat sich die Tatsache herausgestellt, daß sie nur eine geringe Wirksamkeit aufweist und zu einem Empfindlichkeitsverlust führt.

Beim bekannten integrierten mikromechanischen Drucksensor tritt also allgemein am Wandlerelement ohne Kompensation eine Hysterese des Ausgangssignals über der Temperatur auf. Die Hysterese wird allgemein hervorgerufen durch eine plastische Verformung der Aluminiumleiterbahnen der Auswerteschaltung, welche sich im Umgebungsbereich auf dem Träger 11 befinden. Wird das Sensorelement über $\Delta T=60°C$ erwärmt, bauen sich aufgrund des unterschiedlichen thermischen Ausdehnungskoeffizienten von Aluminium und dem Siliziumsubstrat mechanische Spannungen 100 MPa im Aluminium auf. Oberhalb dieser Spannungen fängt das Aluminium zu fließen an. Beim Abkühlvorgang passiert dasselbe in umgekehrter Richtung.

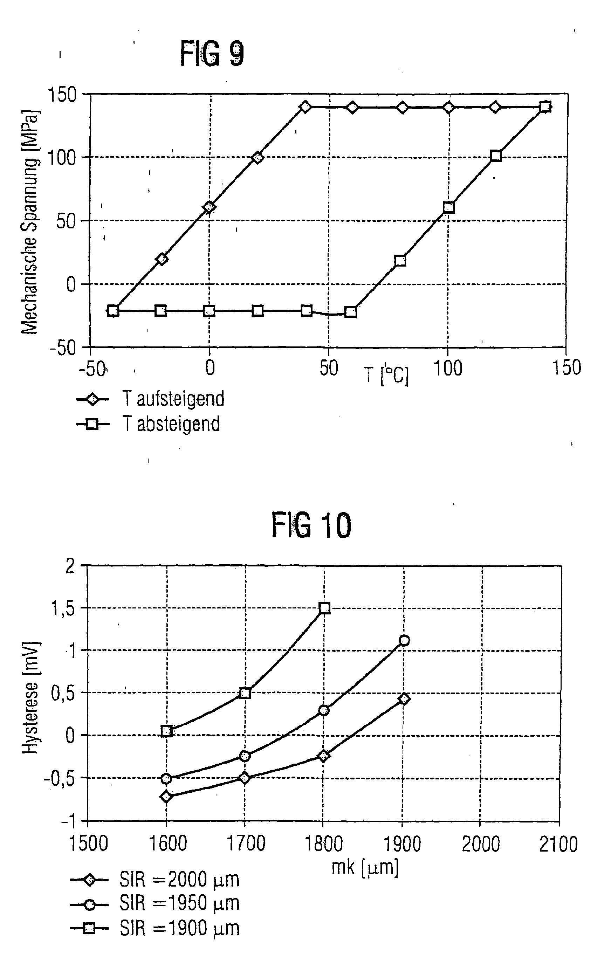

Fig. 9 illustriert diese Hysterese der mechanischen Spannung als Funktion der Temperatur, und Fig. 10 zeigt die Hysterese eines weiteren bekannten Drucksensors ohne Kompensation in Abhängigkeit von der Membrankantenlänge mk für verschiedene Schaltungsinnenradien SIR. Hierbei wird im Gegensatz zum obigen Beispiel davon ausgegangen, daß die Schaltungsleiterbahnen der Auswerteschaltung die Membran vollständig einschließen. Die Chipgröße beträgt 4 mm. Im Bereich der negativen Hysterese überwiegt der globale Effekt, im Bereich der positiven Hysterese der Kanteneffekt.

Das hysteretische Verhalten der gesamten Aluminiumverdrahtung der Auswerteschaltung hat eine integrale Fernwirkung auf die Piezowiderstände des Wandlerelements, und zwar durch eine "Bimetallverformung" (Aluminiumschicht auf Silizium) des gesamten Sensorelements (globaler Effekt) und durch eine lokale Wirkung bei einem Abstand der Schaltungskante zum Piezowiderstand < 100 $\mu$m (Kanteneffekt).

Je nach geometrischer Auslegung überwiegt der globale Effekt bzw. der Kanteneffekt. Die wesentlichen Einflußgrößen sind:

a) Abstand Membrankante zu Auswerteschaltungskante
b) Membrangröße
c) Chipgeometrie
d) Glasdicke, Schnittbreite Glassägen
e) Glasgröße
d) Lotdicke, Kleberdicke, Montageunterlage

Den Einflüssen, die durch die Oberseite des Chips (= Aluminiumverdrahtung der Schaltung) hervorgerufen werden, wirkt bei den rückseitengelöteten Sensoren die Hysterese des Lotes teilweise entgegen. Die Hysterese des Lotes sollte also für die absolute Hystereseberechnung berücksichtigt werden.

Üblicherweise sind vier Meßwiderstände für den mikromechanischen Drucksensor vorgesehen, die sich je nach Typ im Bereich befinden, in dem der Kanteneffekt oder der globale Effekt vorherrscht. Sie werden zu einer Wheatstonebrücke verschaltet, deren Ausgangssignal folgerichtig ebenfalls eine Temperaturhysterese aufweist. Diese Temperaturhysterese überlagert das eigentliche Sensorsignal.

Aus der Schrift DE 199 24 061 A1 ist ein Halbleiterdrucksensor bekannt, der einen Dehnungsmeßstreifen auf einem Membranabschnitt aufweist. Um Spannungsänderungen der Dehnungsmeßstreifen auszugleichen, welche durch eine Temperaturänderung erzeugt werden, sind auf dem Membranabschnitt Spannungsausgleichsfilme vorgesehen.

VORTEILE DER ERFINDUNG

Das erfindungsgemässe mikromechanische Bauelement mit den Merkmalen des Anspruchs 1 und das Abgleichverfahren nach Anspruch 7 oder 8 weisen gegenüber bekannten Lösungsansätzen den Vorteil auf, dass es eine hohe maximale Kompensationswirkung und eine kleine minimale Stufung aufweist.

Es sollte möglich sein, Hysteresen > 5% (sowohl positiv als auch negativ) am Druckwandlerelement zu kompensieren. Die minimale Stufung sollte bei 0,1% Hysterese liegen.

Es tritt kein Empfindlichkeitsverlust oder nur ein minimierbarer Empfindlichkeitsverlust auf. Es kann eine Querkopplung zum Messwiderstand vermieden werden. Schliesslich kann die Kompensation in die Schaltung unproblematisch integriert werden. Es kann ein Abgleich durch Maskenprogrammierung vorgesehen werden. Als Alternative kann an einem Vorläufer eine optimale Kompensation eingestellt werden.

Die der vorliegenden Erfindung zugrundeliegende Idee besteht darin, dass im Umgebungsbereich und/oder im Membranbereich mindestens ein Flecken vorgesehen ist, der aus einem derartigen Material hergestellt ist, dass durch eine Verformung des oder der Flecken relativ zum Substrat ein analoger Störeinfluß derart erzeugbar ist, daß der auf den Meßwiderstand wirkende Störeinfluß kompensierbar ist.

In den Abhängigen Ansprüchen finden sich vorteilhafte Weiterbildungen und Verbesserungen des in Anspruch 1 bzw. 7 oder 8 angegebenen Gegenstandes der Erfindung.

Gemäß einer bevorzugten Weiterbildung ist eine Kompensationswiderstandseinrichtung vorgesehen, welche derart gestaltet ist, daß ein oder mehrere Kompensationswiderstände zum Meßwiderstand hinzuschaltbar sind, wobei im Bereich der Kompensationswiderstände jeweilige Flecken vorgesehen sind. Einer positiven oder negativen Hysterese wird durch bedarfsweises Hinzuschalten von einem oder mehreren Kompensationswiderständen entgegengewirkt.

Gemäß einer weiteren bevorzugten Weiterbildung' ist die Hinzuschaltung des oder der Kompensationswiderstände selektiv durchführbar, so daß aus einer vorgegebenen Anzahl von Kompensationswiderständen eine bestimmte Kombination selektierbar ist, die dem Meßwiderstand hinzuzuschalten ist. Diese Struktur ermöglicht es, den exakten Kompensationseffekt durch Auftrennen von Leiterbahnen am komplett aufgebauten Sensor zu ermitteln. Die Struktur kann auch so ausgelegt sein, daß durch eine Maskenänderung eine bestimmte Kompensationswirkung eingestellt werden kann.

Selektiv hinzuschaltbar heißt, daß durch Auftrennen von Leiterbahnen eine Verbindung unterbrochen wird oder durch Kurzschließen von Leiterbahnen eine Verbindung geschaffen wird. Dies kann z.B. durch Brennstrecken (Laser- oder Spannungsimpuls) bzw. durch Thyristorzapping realisiert werden. So ist ein Einzelabgleich am Bandende für hochpräzise Anforderungen möglich.

Gemäß einer weiteren bevorzugten Weiterbildung sind ein oder mehrere Flecken im Membranbereich vorgesehen, welche direkt auf den Meßwiderstand einwirken.

Gemäß einer weiteren bevorzugten Weiterbildung sind ein oder mehrere vorzugsweise ringförmige Flecken vorgesehen, welche im Umgebungsbereich zwischen Membrankante und Schaltungsinnenradius der Auswerteschaltung liegen. Eine negative Hysterese wird durch den derart steuerbaren globalen Effekt kompensiert. In diesem Fall werden keine Kompensationswiderstände benötigt. Schaltungsinnenradius bedeutet dabei die Stufe zwischen dem Schaltungsbereich und dem Umgebungsbereich (z.B. Al-Stufe).

Gemäß einer weiteren bevorzugten Weiterbildung ist das Material der Flecken das Leiterbahnmaterial der Auswerteschaltung.

Gemäß einer weiteren bevorzugten Weiterbildung liegen die Flecken oberhalb oder längs neben einem zugehörigen Kompensationswiderstand.

Gemäß einer weiteren bevorzugten Weiterbildung ist das Substratmaterial Silizium und das Leiterbahnmaterial Aluminium.

ZEICHNUNGEN

Ausführungsbeispiele der Erfindung sind in den Zeichnungen dargestellt und in der nachfolgenden Beschreibung näher erläutert.

Es zeigen:

Fig. 1 einen Ausschnitt eines mikromechanischen Drucksensors als erste Ausführungsform der vorliegenden Erfindung;

Fig. 2 einen Ausschnitt eines mikromechanischen Drucksensors als zweite Ausführungsform der vorliegenden Erfindung;

Fig. 3a,b einen Ausschnitt eines mikromechanischen Drucksensors als dritte Ausführungsform der vorliegenden Erfindung, und zwar Fig. 3a in Draufsicht und Fig. 3b im Querschnitt;

Fig. 4 eine Untersuchung der relativen hysteretischen Widerstandsänderung bei einer Temperaturschleife von -40 bis 140 °C, wobei der Aluminiumfleck in einem langen Streifen über dem Kompensationswiderstand in Stromrichtung liegt;

Fig. 5 eine Untersuchung der relativen hysteretischen Widerstandsänderung bei einer Temperaturschleife von -40 bis 140 °C, wobei der Aluminiumfleck in einem langen Streifen längs neben dem Kompensationswiderstand in Stromrichtung liegt;

Fig. 6 einen Ausschnitt eines mikromechanischen Drucksensors als vierte Ausführungsform der vorliegenden Erfindung;

Fig. 7 eine Aufsicht auf einen bekannten Drucksensor;

Fig. 8 einen Schnitt durch diesen bekannten Drucksensor;

Fig. 9 die Hysterese der mechanischen Spannung als Funktion der Temperatur bei einem weiteren bekannten Drucksensor; und

Fig. 10    die Hysterese des Ausgangssignals des weiteren bekannten Drucksensors in Abhängigkeit von der Membrankantenlänge für verschiedene Schaltungsinnenradien.

BESCHREIBUNG DER AUSFÜHRUNGSBEISPIELE

In den Figuren bezeichnen gleiche Bezugszeichen gleiche oder funktionsgleiche Elemente.

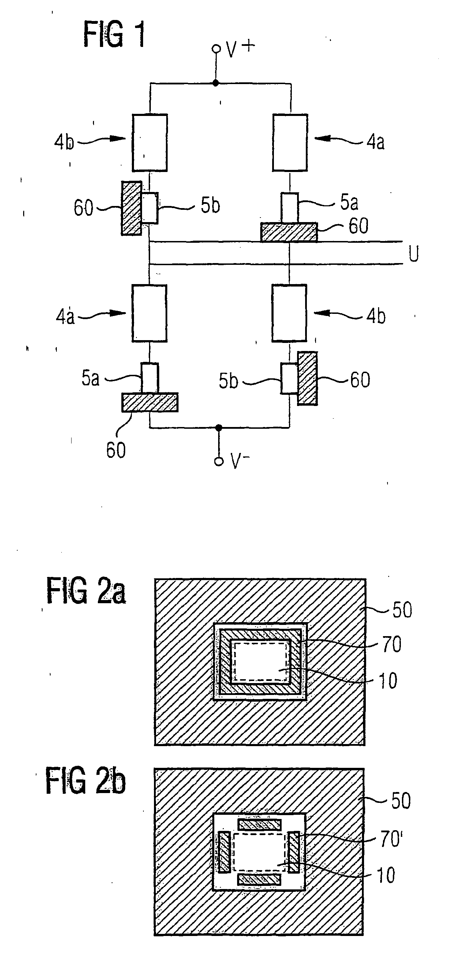

Fig. 1 zeigt einen Ausschnitt eines mikromechanischen Drucksensors als erste Ausführungsform der vorliegenden Erfindung.

In Fig. 1 bezeichnen 4a zwei longitudinale Meßwiderstände und 4b zwei transversale Meßwiderstände, 60 Flecken aus Leiterbahnmaterial (hier Aluminium), 5a zwei Kompensationswiderstände der transversalen Meßwiderstände, 5b zwei Kompensationswiderstände der longitudinalen Meßwiderstände, V+ und V- Versorgungspotentiale und U ein Spannungsausgangssignal.

Es sei bemerkt, daß Fig. 1 nur eine schematische Darstellung der Schaltungsanordnung ist und die Meßwiderstände 4a, 4b auf der Membran liegen, während die Kompensationswiderstände 5a, 5b und zugehörigen Flecken 60 auf den Umgebungsbereich (Träger) angeordnet sind.

Das allgemeine Funktionsprinzip der vorliegenden ersten Ausführungsform liegt darin, die Hysterese des mikromechanischen Drucksensors zu kompensieren, indem in die Zuleitung der Meßwiderstände 4a, 4b die Kompensationswiderstände 5a, 5b integriert (ca. 80 $\mu$m außerhalb der Membran) werden. Dies sind z.B. piezoempfindliche Widerstände von typischerweise 200 $\Omega$/square (Größe ca. 1 square, Widerstandswert ca. 200 $\Omega$), die in Reihe zu den Meßwiderständen liegen. In seitlichem Abstand von typischerweise 10 $\mu$m bis 30 $\mu$m liegen die Aluminiumflecken 60, und zwar quer zu den Kompensationswiderständen 5a und längs zu den Kompensationswiderständen 5b.

Zwischen der Widerstandsebene im Substrat und der Aluminiumebene liegt eine Isolationsebene, z.B. eine SiO$_2$-Schicht, welche nur an gewünschten Punkten Kontaktlöcher aufweist und so ungewollte Kurzschlüsse verhindert.

Je nach Lage der Aluminiumflecken 60 bezüglich der Kompensationswiderstände 5a, 5b wirkt die hysteretische Spannungsdifferenz senkrecht oder parallel zur Stromrichtung. Da der longitudinale und der transversale Piezokoeffizient verschiedene Vorzeichen besitzt, lassen sich damit sowohl positive als auch negative Hysteresen an den Kompensationswiderständen 5a,b erzeugen. Dies wird hier als aktive Hysteresekompensation bezeichnet.

Die zu Kompensationszwecken induzierte Hysteresestärke kann durch den Abstand der Aluminiumflecken 60 zum Kompensationswiderstand 5a, 5b und deren Form und Größe modifiziert werden.

Die in Fig. 1 dargestellte Struktur zeigt allerdings eine beschränkte Wirksamkeit, insbesondere ist die Wirksamkeit vom jeweiligen Sensortyp abhängig.

Durch diese aktive Hysteresekompensation mit piezoempfindlichen Kompensationswiderständen von 200 $\Omega$ verliert die Meßbrücke 10% an Empfindlichkeit. Dies ist vor allem im Niederdruckbereich kritisch. Der Empfindlichkeitsverlust muß durch eine Vergrößerung der Membran kompensiert werden. Dies führt zu einer Erhöhung der Nichtlinearität, erhöht die Gefahr des Buckling und die Kosten. Es ist also eine Kompensation vorzuziehen, die ohne Empfindlichkeitsverlust, bzw. mit möglichst geringem Empfindlichkeitsverlust arbeitet.

Fig. 2a,b zeigt einen Ausschnitt eines mikromechanischen Drucksensors als zweite Ausführungsform der vorliegenden Erfindung. Diese zweite Ausführungsform betrifft eine passive Kompensation negativer Hysterese ohne Empfindlichkeitsverlust.

In Fig. 2a,b bezeichnen 70, 70' einen jeweiligen elektrisch nicht aktiven Metallflecken aus Aluminium, welches zur Kompensation unter Ausnutzung des globalen Effekts dienen.

Ist der Abstand der Membrankante zur Schaltung > 100 $\mu$m, ist die Grundhysterese negativ (vgl. Fig. 10). In diesem Fall kann durch eine künstliche Verkleinerung des Schaltungsinnenradius der Nulldurchgang der Hysterese realisiert werden Dies geschieht durch die zusätzliche Leiterbahnmaterialflecken 70, 70' am Schaltungsrand, die elektrisch funktionslos sind und ausschließlich wegen ihrer mechanischen Wirkung eingesetzt werden.

Bei der zweiten Ausführungsform liegen die Flecken 70, 70' in Ringform vor und befinden sich auf dem Umgebungsbereich der Membran 10, also zwischen Schaltungsinnenradius und Membrankante. Der Ring kann dabei vollständig geschlossen sein (Kompensationsring 70) oder sich auf die Mitte der Membrankanten konzentrieren, da der Effekt in diesem Bereich am größten ist (Kompensationsring 70'). Im letzteren Fall ist in den Ecken mehr Platz für die Auswerteschaltung 50.

Die in diesem Beispiel vorgestellte passive Kompensation hat keinen Einfluß auf die Empfindlichkeit. Allerdings erhöht sie die Kosten, da elektrisch inaktive Fläche verbraucht wird. Es können dabei alternativ entweder ein breiter Aluminiumstreifen oder viele kleine Streifen verwendet werden.

Die Einflußstärke der Variation des Schaltungsinnenradius ist zwar groß, da aber die Aluminiumkante auf 1 $\mu$m genau herstellbar ist (fototechnisch definiert), verfügt man in Summe trotzdem über eine sehr feine "Stellschraube der Hysteresekompensation".

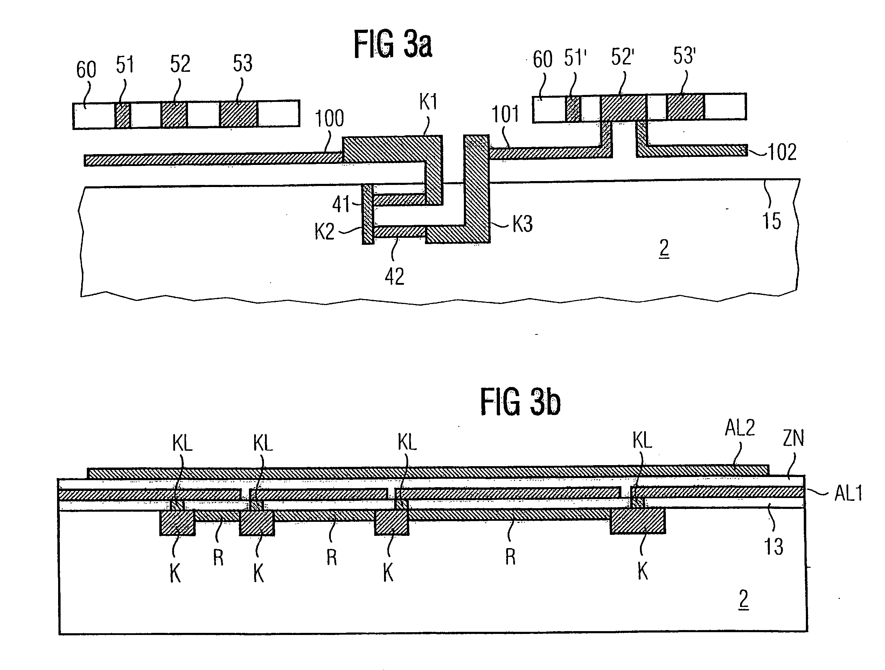

Fig. 3a,b zeigen einen Ausschnitt eines mikromechanischen Drucksensors als dritte Ausführungsform der vorliegenden Erfindung. Diese dritte Ausführungsform betrifft eine Kompensation positiver Hysterese bei möglichst geringem Empfindlichkeitsverlust.

In Fig. 3a,b bezeichnen zusätzlich zu den bereits eingeführten Bezugzeichen K1, K2, K3 ins Substrat eingebrachte niederohmige Zuleitungsbereiche, 41, 42 Meßwiderstände, 100, 101, 102 Leiterbahnen aus Aluminium und 51, 52, 53 bzw. 51', 52', 53' Kompensationswiderstände.

Für den Fall, daß der Schaltungsinnenradius so nah an der Kante liegt, daß die Hysterese bereits im positiven Bereich liegt, muß eine aktive Hysteresekompensation (d.h. Kompensationswiderstand verbunden mit, z.B. in Reihe zu, dem Meßwiderstand) eingeschaltet werden. Dabei ist die Anordnung am günstigsten, bei der der absolute Wert des Kompensationswiderstands möglichst gering ist, die Hysterese des Widerstandswerts aber möglichst groß. Dadurch wird eine maximale Kompensation bei minimalem Empfindlichkeitsverlust erzielt.

Beim ersten Ausführungsbeispiel ist der jeweilige Kompensationswiderstand 5a,b von 200 Ω fest in die Gesamtbrücke installiert. Dies bedeutet einen Empfindlichkeitsverlust von 10% auch für den Fall, daß die Kompensation gar nicht notwendig ist, d.h. der zugehörige Meßwiderstand keine Aluminiumumgebung besitzt.

Günstiger ist es, die Kompensationswiderstände so anzuordnen, daß sie nur dann in die Wheatstonebrücke integriert werden, wenn tatsächlich eine Kompensation notwendig ist. Die vorgeschlagene Struktur gemäß der dritten Ausführungsform besteht aus einer jeweiligen Reihe von Kompensationswiderständen 51, 52, 53 bzw. 51', 52', 53', die alternativ oder zusammen in Reihe zu den Meßwiderständen 41, 42 geschaltet werden können. Die Widerstandswerte sind dabei z.B. 2x90 Ω (51, 51'), 2x180 Ω (52, 52') und 2x360 Ω (53, 53'). Dies entspricht z.B. 0,5 square, 1 square und 2 square des Basiswiderstandes. Dabei wird der einzuschaltende Gesamtwiderstand so gewählt, daß er für die Kompensation ausreichend ist.

Werden diese Kompensationswiderstände 51, 52, 53 bzw. 51', 52', 53', in Reihe zu einem transversalen Meßwiderstand 41, 42 geschaltet, besitzen sie kompensatorische Wirkung der Hysterese in die negative Richtung. Im vorliegenden Fall ist nur der 180 Ω (1 square)-Kompensationswiderstand 52' angeschlossen. Dies kann beim Endmessen durch Entfernen überflüssiger oder Hinzufügen gewünschter Leiterbahnen (z.B. zur Erzeugung von Kurzschlüssen) oder im Maskenprogrammierstadium geschehen. Im letzteren Fall sind Vorläufer mit Testwafern empfehlenswert.

Das oben erwähnte Vorzeichen gilt für den Fall, daß Aluminium längs über dem Widerstand liegt. Liegt das Aluminium längs neben dem Widerstand, ergibt sich eine kompensatorische Wirkung in die positive Richtung (positive Richtung, wenn Kompensationswiderstand unter Aluminuim im longitudinalen Ast, und negative Richtung, wenn Kompensationswiderstand neben Aluminuim im longitudinalen Ast).

Aus Fig. 3b geht schematisch der Schichtaufbau der Ausführungsform nach Fig. 3a hervor. Dort bezeichnen K die Zuleitungsbereichebene, welche im Bereich der Widerstandsebene liegt. 13 ist eine Isolatorebene, Al1 eine erste Leiterbahnebene, ZN eine Zwischennitridebene und Al2 eine zweite Leiterbahnebene für die Flecken 60. KL schließlich bezeichnen Kontaktlöcher zum Verbinden der Kontaktebene K mit der ersten Leiterbahnebene All. Nicht dargestellt ist eine oberste Schutzschicht aus Nitrid.

Bei Bedarf werden die Al1-Leiterbahnen kurzgeschlossen. Damit sind die entsprechenden Widerstände deaktiviert. Werden die Widerstände nur in ihrer elektischen Wirkung benötigt, wird Al2 ganz entfernt, und Al1 wird über den Widerstände entfernt, verbleibt aber als Kontaktanschluß.

Untersuchungen haben gezeigt, daß es günstiger ist, einen langen Aluminiumstreifen direkt über den Widerstand zu legen, da die hysteretischen mechanischen Spannungen am Ort des Widerstands um einen Faktor 3 größer sind. Damit lassen sich relative hysteretische Widerstandsänderungen von 1 % - 1,2 % erzeugen, im Gegensatz, zu den Strukturen mit seitlicher Aluminiumbedeckung, wo 0,3%-0,4% erreichbar sind.

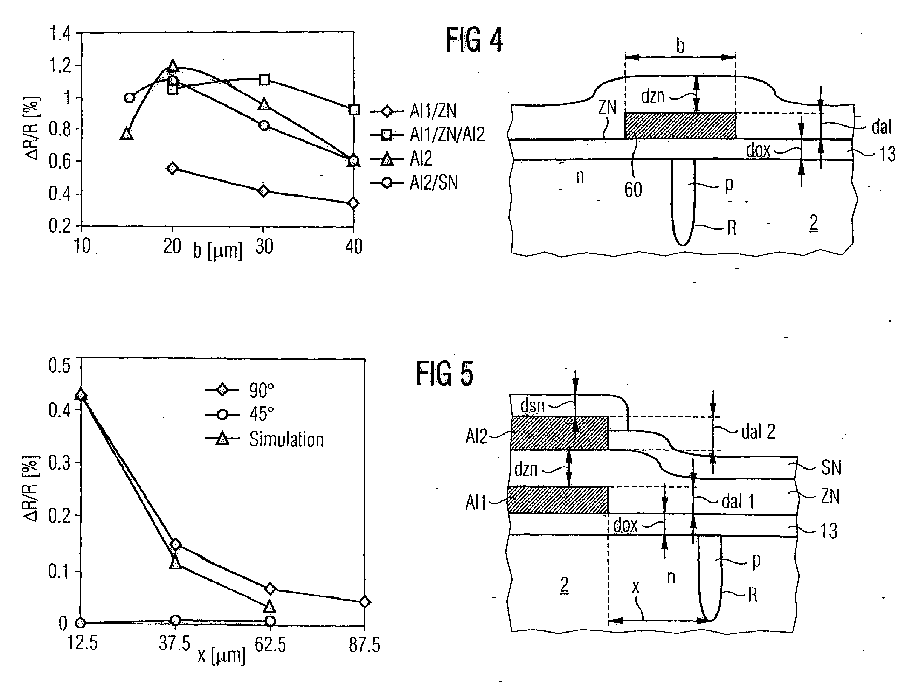

Dies ist in Fig. 4 und 5 illustriert, von denen Fig. 4 eine Untersuchung der relativen hysteretischen Widerstandsänderung bei einer Temperaturschleife von -40 bis 140 °C zeigt, wobei der Aluminiumfleck in einem langen Streifen über dem Kompensationswiderstand in Stromrichtung liegt, und Fig. 5 eine analoge Untersuchung, wobei der Aluminiumfleck in einem langen Streifen längs neben dem Kompensationswiderstand in Stromrichtung liegt.

In Fig. 4 bezeichnen zusätzlich zu den bereits eingeführten Bezugzeichen b die Breite der Al-Leiterbahn, $d_{zn}$ die Dicke des Zwischennitrids, $d_{al}$ die Aluminiumdicke und $d_{ox}$ die Isolatordicke (hier $SiO_2$). Der Widerstand R ist hier durch eine p-Diffusion in ein n-Substrat realisiert.

Wie aus der Darstellung von der relativen Widerstandsänderung $\Delta R/R$ (Maß für Hysterese) über b für verschiedene Schichtanordnungen erkennbar, hängt der erzielbare Effekt kaum von b ab und beträgt bis zu 1,2%.

In Fig. 5 bezeichnen zusätzlich zu den bereits eingeführten Bezugzeichen x den Abstand der Al-Leiterbahn zum Widerstand R, $d_{sn}$ die Dicke des Schutznitrids und $d_{all/2}$ die Aluminiumdicken der beiden Leiterbahnschichten.

Wie aus der Darstellung von der relativen Widerstandsänderung $\Delta R/R$ (Maß für Hysterese) über b für verschiedene Schichtanordnungen erkennbar, hängt der erzielbare Effekt bei 90° stark von x ab und beträgt nur bis zu 0,45%. Dabei beziehen sich die Winkelangaben auf den Winkel, den die Kompensationswiderstände zur 100-Richtung bilden, also 90° heißt parallel zur 110-Richtung.

Im folgenden wird die Berechnung der zu erwartenden Hysterese näher erläutert.

Ein einzelner (z.B. longitudinale) Widerstand $R_L$ bestehend aus dem Meßwiderstand $R_{Meß}$ und dem Kompensationswiderstand $R_{Komp}$ ist gegeben durch

$$R_L = R_{Meß} + R_{Komp} \tag{1}$$

Unter Berücksichtigung der Temperaturabhängigkeit des Halbleiterwiderstands und des Piezoeffekts kann der Meßwiderstand ausgedrückt werden durch

$$R_{Meß} = R_{Meß}(T) + \frac{\Delta R_{Meß}}{R_{Meß}(T)} R_{Meß}(T) \tag{2}$$

wobei $R_{Meß}(T)$ den linearen und quadratischen Temperaturverlauf des Basiswiderstands beschreibt

$$R_{Meß}(T) = R_0 + TKR^* \Delta T + TK2R^* \Delta T^2 \tag{3}$$

Dabei sind TKR und TK2R entsprechende Konstanten. $\Delta R_{Meß}$ ergibt sich aus dem Piezoeffekt:

$$\frac{\Delta R_{Meß}}{R_{Meß}(T)} = \pi_L \sigma_L \qquad \text{bei Temp.} = \text{const} \tag{4}$$

Diese Größe ist meßtechnisch zugänglich, und die Größenordnung der Änderung beträgt ca. 2%. $R_{Meß}(T)$ ändert sich im gesamten Temperaturverlauf um ca. 20%.
Die mechanische Spannung $\sigma_L$ wird dabei hervorgerufen durch die Druckverformung der Membran $\sigma_L(p)$ unter dem Druck p und durch thermisch induzierte Verformungen $\sigma_L(T)$. Es ergibt sich:

$$\sigma_L = \sigma_L(p) + \sigma_L(T) \tag{5}$$

Für den transversalen Widerstand $R_T$ gilt eine analoge Beziehung.
Für den benötigten Kompensationswiderstand $R_{Komp}$ gilt:

$$R_{Komp} = R_{Komp}(T) + \frac{\Delta R_{Komp}}{R_{Komp}(T)} R_{Komp}(T) \tag{6}$$

wobei

$$\frac{\Delta R_{Komp}}{R_{Komp}(T)} = \pi_L \sigma_T$$

Die mechanische Spannung bei aufsteigender Temperatur steht dabei senkrecht zur Stromrichtung, wenn der Metallstreifen den Widerstand längs überdeckt. Es liegt im Gegensatz zum Meßwiderstand nur eine Temperaturabhängigkeit vor, d.h.

$$\sigma_T = \sigma_T(T) \qquad (7)$$

Wegen der Beziehung

$$U_{out} = U_{Vers} \frac{\left(1 + \dfrac{\Delta R_T}{R_T}\right)^2 - \left(1 + \dfrac{\Delta R_L}{R_L}\right)^2}{\left(2 + \dfrac{\Delta R_T}{R_T} + \dfrac{\Delta R_L}{R_L}\right)^2} \qquad (8)$$

bewirkt eine Differenz zwischen transversalem und longitudinalem Widerstand ein Signal am Brückenausgang. Um die Hysterese auf Null zu kompensieren, müssen transversale und longitudinale Widerstände über der Temperatur die gleiche Hysterese besitzen. Die aus Gleichung (8) resultierende Hysterese ohne Kompensation ist in Fig. 10 dargestellt.

Mithilfe der oben angegebenen Beziehungen wurde die Wirkung der Kompensationsstruktur berechnet. Dabei wurden hysteretische mechanische Spannungen eingegeben, wie sie aus Simulationen folgen. Am Ort der Meßwiderstände wird ein Wert von 0,2MPa eingesetzt. Dies führt rechnerisch zu einer Brückenhysterese von 0,5%. Am Ort der Kompensationswiderstände, d.h. unter Al1 und Al2 wurde eine remanente Spannung von 10MPa (Simulationen) angenommen. Dies führt rechnerisch zu einer Hysterese von 0,5%. Die mechanischen Spannungen aufgrund der druckbedingten Membranverformung wurden ebenfalls mit Simulation ermittelt. Sie liegen in der Größenordnung von 30MPa. In den Simulationen wurde auch die Druckabhängigkeit der Hysterese berücksichtigt, auf die in dieser Anmeldung nicht weiter eingegangen wird. Diese Druckabhängigkeit bewirkt die Aufspreizung der Hysteresekurven. Beim Rechenbeispiel ergab sich ein Kompensationswiderstand pro Ast von 140 Ω, um die Gesamthysterese unter 1 mV zu drücken.

Existiert in der Anordnung wie in Fig. 3a nicht direkt ein 140Ω-Widerstand, ist dies annähernd durch eine Kombination dergestalt, daß in den Ast des einen transversalen Widerstands ein 90Q- in den Ast des zweiten transversalen Widerstands ein 180Ω-Widerstand eingebaut wird, zu erreichen.

Im Beispiel wurde bislang davon ausgegangen, daß sowohl die Al1- als auch die Al2-Ebene verwendet wird. In diesem Fall beträgt der maximal erzielbare hysteretische Streß (remanente Spannung) unter dem Aluminiumstreifen, d.h also am Ort des Kompensationswiderstands 10MPa. Wird nur die All-Ebene verwendet, beträgt der Streß ca. 1/3 dieses Wertes.

Dies entspricht einer relativen hysteretischen Widerstandsänderung von 0,3%-0,4% gegenüber 1%-1,2%, wenn die Al1- und Al2-Ebene verwendet werden. ,

Wird also nur die Al1-Ebene über die Kompensationswiderstände gelegt, wird der Kompensationseffekt auf 1/3 herabgesetzt. Damit liegt die feinste Kompensationswirkung bei unter 0,1% der Brückenhysterese.

Wenn vor jeden transversalen Widerstand in beiden Ästen sowohl die 90Ω-, als auch 180Ω- und die 360Ω-Widerstände eingeschaltet werden, ist eine potentielle Kompensationswirkung von 4,5% Brückenhysterese möglich.

Um die Symmetrie der Brücke (Offset) zu gewährleisten, wird in den Ast des longitudinalen Widerstands ein entsprechender Widerstand dazugeschaltet. Dieser Widerstand wird aber nicht mit einer Metallumgebung versehen. Somit ist elektrische Symmetrie gegeben.

Eine weitere Erhöhung der Kompensationswirkung kann natürlich erzielt werden, wenn die Kompensationswiderstände der longitudinalen Meßwiderstände mit seitlich daneben liegenden Metallstreifen ausgelegt werden. Da der Effekt wie oben dargestellt, ca. um einen Faktor 3 niedriger liegt, ist hierdurch eine Erhöhung der potentiellen Gesamtkompensation von 4,5% auf 6% möglich.

' Fig. 6 zeigt einen Ausschnitt eines mikromechanischen Drucksensors als vierte Ausführungsform der vorliegenden Erfindung.

Bei dieser vierten Ausführungsform findet eine Hysteresekompensation direkt am Meßwiderstand statt, d.h. die Aluminiumflecken 60 sind so angeordnet, daß sie direkt auf den Meßwiderständen 41, 42 liegen. Dies ermöglicht eine Kcmpensation auch in dem Fall, daß beim ursprünglichen Schaltungsinnenradius bereits eine positive Grund-Hysterese vorliegt ( d.h. die Schaltung ist bereits zu nah an der Membrankante). Bei einem longitudinalen Widerstand (es überwiegt der Kanteneffekt, also kompressiver Streß senkrecht zur Stromrichtung) würde ein Kompensationsstreifen 60 längs auf dem Widerstand plaziert, denn dies produziert ebenfalls einen kompressiven Streß, aber parallel zur Stromrichtung.

Wegen der Beziehung

$$\cdot \frac{\Delta R}{R} = \pi_l \sigma + \pi_t \sigma_t$$

wirken die beiden Änderungen gegenläufig.

Obwohl das erfindungsgemäße mikromechanische Bauelement vorstehend anhand bevorzugter Ausführungsbeispiele beschrieben wurde, ist es darauf nicht beschränkt, sondern auf vielfältige Art und Weise modifizierbar.

Allgemein kann die Kompensation der Hysterese auf verschiedene Weise erfolgen. Einerseits kann dies durch Maskenprogrammierung, z.B. über die Ebenen Kontakt und Metall, geschehen. Die Widerstände liegen von Haus aus unter dem Oxid und sind damit garantiert inaktiv. Sie werden nur bei Bedarf angeschlossen.

Andererseits kann diese zu Testzwecken mittels FIB-Schnitt (FIB = Focus Ion Beam) oder Brennstrecken oder Thyristorzapping oder Oxidzapping erfolgen. Für Testzwecke wird an Test-Chips die Struktur so ausgelegt, daß mittels FIB-Schnitt ein Anschließen der Kompensationswiderstände möglich ist. Damit ist eine schnelle Optimierung am aufgebauten Sensor möglich.

Die Abgleichstrukturen können ebenso im Schaltungsteil integriert sein. Dies ist sogar von Vorteil, falls eine Beeinflussung der Kompensationswiderstände von der Membrankante vorliegt.

## Patentansprüche

1. Mikromechanisches Bauelement, insbesondere Drucksensor, mit:

    - einem Substrat (2), welches einen Membranbereich (10) und einen Umgebungsbereich des Membranbereichs (10) aufweist; und
    - mindestens einem in dem Membranbereich (10) vorgesehenen durch Verformung des Membranbereichs (10) veränderlichen Messwiderstand (4a, 4b; 41, 42); und
    - einer in dem Umgebungsbereich vorgesehenen entsprechenden Auswerteschaltung (50), wobei durch eine Verformung von Teilen, insbesondere Leiterbahnen, der Auswerteschaltung (50) relativ zum Substrat (2) ein Störeinfluss auf den Messwiderstand (4a, 4b; 41, 42) erzeugbar ist; und
    - mindestens einem im Umgebungsbereich und/oder im Membranbereich (10) vorgesehenen Flecken (60; 70, 70') aus einem derartigen Material, dass durch eine Verformung des oder der Flecken (60) relativ zum Substrat (2) ein analoger Störeinfluss derart erzeugbar ist, dass der auf den Messwiderstand (4a, 4b; 41, 42) wirkende Störeinfluss kompensierbar ist; **gekennzeichnet durch**
    - eine Kompensationswiderstandseinrichtung, welche derart gestaltet ist, dass ein oder mehrere Kompensationswiderstände zum Messwiderstand (4a, 4b; 41, 42) hinzu schaltbar sind;

    wobei oberhalb oder längs neben einem zugehörigen Kompensationswiderstand (5a, 5b; 51, 52, 53, 51', 52', 53') Flecken (60) vorgesehen sind.

2. Mikromechanisches Bauelement nach Anspruch 1, **dadurch gekennzeichnet, dass** die Hinzuschaltung des oder der Kompensationswiderstände (5a, 5b; 51, 52, 53, 51', 52', 53') selektiv durchführbar ist, so dass aus einer vorgegebenen Anzahl von Kompensationswiderständen eine bestimmte Kombination selektierbar ist, die dem Messwiderstand hinzuzuschalten ist.

3. Mikromechanisches Bauelement nach Anspruch 1 oder 2, **dadurch gekennzeichnet, dass** ein oder mehrere Flecken (60) im Membranbereich (10) vorgesehen sind, welche direkt auf den Messwiderstand (41, 42) einwirken.

4. Mikromechanisches Bauelement nach einem der vorhergehenden Ansprüche, **dadurch gekennzeichnet, dass** ein oder mehrere vorzugsweise ringförmige Flecken (70, 70') vorgesehen sind, welche im Umgebungsbereich zwischen Membrankante (15) und Schaltungsinnenradius der Auswerteschaltung (50) liegen.

**5.** Mikromechanisches Bauelement nach einem der vorhergehenden Ansprüche, **dadurch gekennzeichnet, dass** das Material der Flecken (60; 70, 70') das Leiterbahnmaterial der Auswerteschaltung (50) ist.

**6.** Mikromechanisches Bauelement nach einem der vorhergehenden Ansprüche, **dadurch gekennzeichnet, dass** das Substratmaterial Silizium und das Leiterbahnmaterial Aluminium ist.

**7.** Abgleichverfahren für ein mikromechanisches Bauelement nach Anspruch 2, wobei die Hinzuschaltung an einem Testchip optimiert wird.

**8.** Abgleichverfahren für ein mikromechanisches Bauelement nach Anspruch 2, wobei die Hinzuschaltung in einem Endeinzelabgleich optimiert wird.

**Claims**

**1.** Micromechanical component, in particular pressure sensor, comprising:

- a substrate (2) having a membrane region (10) and a surrounding region of the membrane region (10); and
- at least one measuring resistor (4a, 4b; 41, 42) which is provided in the membrane region (10) and can be varied by deformation of the membrane region (10); and
- a corresponding evaluation circuit (50) provided in the surrounding region, wherein a disturbing influence on the measuring resistor (4a, 4b; 41, 42) can be produced by a deformation of parts, in particular conductor tracks, of the evaluation circuit (50) relative to the substrate (2); and
- at least one pad (60; 70, 70') provided in the surrounding region and/or in the membrane region (10) and composed of a material such that a deformation of the pad or pads (60) relative to the substrate (2) can produce an analogous disturbing influence such that the disturbing influence acting on the measuring resistor (4a, 4b; 41, 42) can be compensated for; **characterized by**
- a compensation resistor device, which is configured in such a way that one or a plurality of compensation resistors can be connected supplementarily with respect to the measuring resistor (4a, 4b; 41, 42);

wherein pads (60) are provided above or longitudinally alongside an associated compensation resistor (5a, 5b; 51, 52, 53, 51', 52', 53').

**2.** Micromechanical components according to Claim 1, **characterized in that** the supplementary connection of the compensation resistor or compensation resistors (5a, 5b; 51, 52, 53, 51', 52', 53') can be carried out selectively, such that, from a predetermined number of compensation resistors, it is possible to select a specific combination which is to be connected supplementarily to the measuring resistor.

**3.** Micromechanical component according to Claim 1 or 2, **characterized in that** one or a plurality of pads (60) are provided in the membrane region (10), which act directly on the measuring resistor (41, 42).

**4.** Micromechanical component according to any of the preceding claims, **characterized in that** one or a plurality of preferably ring-shaped pads (70, 70') are provided, which lie in the surrounding region between membrane edge (15) and circuit inner radius of the evaluation circuit (50).

**5.** Micromechanical component according to any of the preceding claims, **characterized in that** the material of the pads (60; 70, 70') is the conductor track material of the evaluation circuit (50).

**6.** Micromechanical component according to any of the preceding claims, **characterized in that** the substrate material is silicon and the conductor track material is aluminium.

**7.** Balancing method for a micromechanical component according to Claim 2, wherein the supplementary connection is optimized on a test chip.

**8.** Balancing method for a micromechanical component according to Claim 2, wherein the supplementary connection is optimized in an end individual balancing.

**Revendications**

1. Composant micromécanique, en particulier sonde de pression, qui présente :

   - un substrat (2) qui présente une partie (10) en membrane et une partie qui entoure la partie (10) en membrane et
   - au moins une résistance variable de mesure (4a, 4b; 41, 42) formée dans la partie en membrane (10) par déformation de la partie en membrane (10) et
   - un circuit d'évaluation (50) approprié ménagé dans la partie environnante, une déformation de parties, en particulier de pistes conductrices, du circuit d'évaluation (50) par rapport au substrat (2) permettant d'exercer une influence perturbatrice sur la résistance de mesure (4a, 4b; 41, 42) et
   - au moins une tache (60; 70, 70') prévue dans la partie environnante et/ou dans la partie en membrane (10), en un matériau tel qu'une déformation de la ou des taches (60) par rapport au substrat (2) permet d'exercer une influence perturbatrice analogue qui permet de compenser l'influence perturbatrice qui agit sur la résistance de mesure (4a, 4b; 41, 42),

   **caractérisé par**

   - un système à résistance de compensation configuré de manière à pouvoir ajouter une ou plusieurs résistances de compensation à la résistance de mesure (4a, 4b; 41, 42) et
   - par des taches (60) prévues au-dessus ou le long d'une résistance de compensation associée (5a, 5b; 51, 52, 53, 51', 52', 53').

2. Composant micromécanique selon la revendication 1, **caractérisé en ce que** le raccordement supplémentaire de la ou des résistances de compensation (5a, 5b; 51, 52, 53, 51', 52', 53') peut être réalisé sélectivement de sorte qu'à partir d'un nombre prédéterminé de résistances de compensation, on puisse sélectionner une combinaison définie qui est ajoutée à la résistance de mesure.

3. Composant micromécanique selon les revendications 1 ou 2, **caractérisé en ce qu'**une ou plusieurs taches (60) sont prévues dans la partie en membrane (10) pour agir directement sur la résistance de mesure (41, 42).

4. Composant micromécanique selon l'une des revendications précédentes, **caractérisé en ce qu'**une ou plusieurs taches (70, 70'), de préférence de forme annulaire, sont prévues et sont situées dans la partie environnante, entre le bord (15) de la membrane et le rayon intérieur du circuit d'évaluation (50).

5. Composant micromécanique selon l'une des revendications précédentes, **caractérisé en ce que** le matériau des taches (60; 70, 70') est le matériau des pistes conductrices du circuit d'évaluation (50).

6. Composant micromécanique selon l'une des revendications précédentes, **caractérisé en ce que** le matériau du substrat est le silicium et le matériau des pistes conductrices l'aluminium.

7. Procédé d'équilibrage d'un composant micromécanique selon la revendication 2, dont le raccordement supplémentaire sur une puce de test est optimisé.

8. Procédé d'équilibrage d'un composant micromécanique selon la revendication 2, dont le raccordement supplémentaire est optimisé en un équilibrage final distinct.

FIG 1

FIG 2a

FIG 2b

# FIG 3a

60　51　52　53

60　51'　52'　53'

100　K1　101　102

K2　41　K3　15

42　2

# FIG 3b

KL　KL　KL　KL　AL2　ZN

AL1

K　R　K　R　K　R　K　13

2

EP 1 277 033 B1

FIG 4

FIG 5

Al1/ZN
Al1/ZN/Al2
Al2
Al2/SN

90°
45°
Simulation

14

## FIG 6

10
15

41 60
K2 K1
K3
42

## FIG 7

6    A →    6
2
31
7    7
11
5
30    4
30
10
[1$\bar{1}$0]
41
A' →
[110]    40

## FIG 8

4    10    11
A    A'
2

## FIG 9

Mechanische Spannung [MPa] vs T [°C]

◇— T aufsteigend
□— T absteigend

## FIG 10

Hysterese [mV] vs mk [µm]

◇— SIR = 2000 µm
○— SIR = 1950 µm
□— SIR = 1900 µm

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19701055 A1

- DE 19924061 A1